Europäisches Patentamt

European Patent Office

Office européen des brevets

(19)

(11) Veröffentlichungsnummer : **0 114 871**
**B1**

(12) # EUROPÄISCHE PATENTSCHRIFT

(45) Veröffentlichungstag der Patentschrift :
16.04.86

(21) Anmeldenummer : 83902522.8

(22) Anmeldetag : 22.07.83

(86) Internationale Anmeldenummer :
PCT/DE 83/00130

(87) Internationale Veröffentlichungsnummer :
WO/8400614 (16.02.84 Gazette 84/05)

(51) Int. Cl.⁴ : **G 01 R 31/36, H 02 J 7/04**

(54) VERFAHREN UND VORRICHTUNG ZUM ÜBERWACHEN DER JEWEILS EINGELADENEN KAPAZITÄT VON AKKUMU-
LATOREN.

(30) Priorität : 23.07.82 DE 3227522

(43) Veröffentlichungstag der Anmeldung :
08.08.84 Patentblatt 84/32

(45) Bekanntmachung des Hinweises auf die Patenterteilung : 16.04.86 Patentblatt 86/16

(84) Benannte Vertragsstaaten :
AT BE CH DE FR GB LI LU NL SE

(56) Entgegenhaltungen :
FR-A- 2 239 773
GB-A- 2 086 674
US-A- 3 500 167
US-A- 3 963 976
Funkschau, vol. 51, no. 14, July 1979, München,(DE),
H.J. Klattenhoff: "SZL-ein Ladegerät in neuer Technik", pages 785-788

(73) Patentinhaber : STUBBE ELECTRONIC PAUL K
STUBBE GMBH & Co
Julius-Heyman-Strasse 3-5
D-6000 Frankfurt/Main 1 (DE)

(72) Erfinder : STUBBE, Paul, K.
Julius-Heyman-Strasse 3-5
D-6000 Frankfurt/Main 1 (DE)

(74) Vertreter : Seibert, Rudolf, Dipl.-Ing.
Tattenbachstrasse 9
D-8000 München 22 (DE)

## Beschreibung

Die vorliegende Erfindung bezieht sich auf ein Verfahren zum Überwachen der jeweils eingeladenen Kapazität (Istkapazität) von aus Nickel-Cadmium-Zellen aufgebauten Akkumulatoren während einer von einem unbekannten Ladezustand ausgehenden Schnelladung sowie auf eine Vorrichtung zur Durchführung des Verfahrens.

Aus Nickel-Cadmium-Zellen aufgebaute Akkumulatoren (NiCd-Akkus) werden überall dort eingesetzt, wo bei Geräten im mobilen Einsatz wegen der langen Nutzungsdauer eine Verwendung von nicht wiederaufladbaren Batterien diese wegen deren hohen Kosten unwirtschaftlich wären. Dabei wird bei den für die Verwendung vorgenannter Akkus angestellten Wirtschaftlichkeitsberechnungen immer davon ausgegangen, daß die verwendeten Akkumulatoren nach jeweiliger Wiederaufladung bis zur vollen oder bis angenähert der vollen Nennkapazität aufgeladen seien. Dies ist aber keineswegs immer der Fall, da durch die verschiedensten Einflüsse im Laufe der Zeit die in einem derartigen Akkumulator speicherbare Energie mehr und mehr abnimmt. Diese Abnahme der Ladekapazität wird dabei im allgemeinen erst dann festgestellt, wenn das mit dem Akkumulator zu betreibende Gerät während der Zeit seiner Einsatzbereitschaft plötzlich ausfällt, was insbesondere bei allen Notrufaggregaten usw. besonders störend, ja gelegentlich sogar lebensgefährlich sein kann.

Unter Nennkapazität wird dabei im allgemeinen der Wert verstanden, der von Akkumulatorherstellern für einen bestimmten Zellentyp angegeben wird. Er ist für jede Bauform eines Akkumulators typisch und sollte — was ebenfalls nicht immer garantiert ist — bei der Auslieferung der Akkumulatoren erreicht werden.

Die Istkapazität ist dagegen die nach einer vollständigen Ladung des Akkumulators tatsächlich zur Verfügung stehende Energiemenge. Sie ist alterungsabhängig und wird durch die verschiedensten Einflüsse, wie zu hohe Temperatur, Überladung, aufgetretene Kurzschlüsse usw., im Laufe der Zeit wesentlich geringer als die Nennkapazität.

Im allgemeinen wird davon ausgegangen, daß, wenn bei Wiederaufladung mit mindestens dem 8-fachen des angegebenen Ladestromes $I_{10}$ eine bestimmte, vom Hersteller angegebene Zellenspannung erreicht wird, der Akkumulator mindestens 70-80 % der Nennkapazität erreicht haben würde. Es hat sich aber herausgestellt, daß diese Aussage höchst unzuverlässig ist. Sie trifft nur für solche Akkumulatoren zu, die tatsächlich noch ihre Nennkapazität aufweisen. Bei Akkumulatoren hingegen, die diese Nennkapazität nicht mehr besitzen, führt diese Methode zu einer überhöhten Spannung und einer Überladung und damit einer weiteren Schädigung der einzelnen Zellen.

Da umgekehrt die Betriebssicherheit der mit den Akkumulatoren zu betreibenden Geräte die Kenntnis der tatsächlichen Kapazität der einzelnen wieder aufgeladenen Akkumulatoren unbedingt erfordert, um einen Ausfall der Geräte im Betrieb zu vermeiden, besteht Bedarf an einem Verfahren, die jeweils eingeladene Kapazität zu messen, um u. a. Akkumulatoren auszuscheiden, die für den jeweils notwendigen Einsatz der entsprechenden Geräte nicht mehr geeignet sind.

Um die eingeladene Kapazität zu messen, könnte man daran denken, jeden einzelnen Akkumulator vor seiner Wiederaufladung vollständig zu entladen und dann die gesamte Energieaufnahme vom Ladezustand 0 bis zu dem Zeitpunkt, wo die vom Hersteller angegebene Zellenspannung erreicht ist, zu messen.

Abgesehen davon, daß ein derartiges Vorgehen wegen der für die Entladung und die nachfolgende Aufladung notwendige Zeit äußerst zeitaufwendig ist, würde hierdurch unverhältnismäßig viel Energie verbraucht, da ja in vielen Einsatzbereichen, z. B. auch im militärischen Bereich, Akkumulatoren zur Wiederaufladung gegeben werden, obwohl kaum Energie entnommen worden ist, während andere Akkumulatoren stark belastet waren.

Aufgabe der Erfindung ist es deshalb, ein Verfahren zur Überwachung der jeweils eingeladenen Kapazität anzugeben, das die tatsächlich vorhandene Kapazität während einer von einem unbekannten Ladezustand ausgehenden Schnelladung ermittelt und damit während der Ladung die Ausscheidung von Akkumulatoren, die eine vorgegebene Mindestkapazität nicht erreichen, ermöglicht.

Diese Aufgabe wird mit einem Schnelladeverfahren mit den Verfahrensschritten gemäß dem Patentanspruch 1 gelöst.

Vorteilhafte Ausgestaltungen dieses Verfahrens sind Gegenstand der Unteransprüche.

Weiter ist es Aufgabe der Erfindung, eine Vorrichtung anzugeben, die die Durchführung der Verfahrensschritte nach Patentanspruch 1 vollautomatisch ermöglicht und eine Kennzeichnung von Akkumulatoren, die eine vorgegebene Kapazität nicht mehr aufweisen, garantiert.

Eine derartige Vorrichtung ist Gegenstand des Patentanspruches 12.

Bei dem Verfahren nach der Erfindung wird also zur Ermittlung der jeweils eingeladenen Kapazität eine Schnelladung in mehreren Phasen angewendet, wobei in der ersten Ladephase ein Ladestrom zugeführt wird, der ein Mehrfaches des vom Hersteller angegebenen Ladestromes $I_{10}$ beträgt. Von dieser ersten Ladephase wird auf eine Ladephase mit geringem Ladestrom umgeschaltet, sobald sich über den zu ladenden Akkumulator bzw. einer einzelnen Zelle eine bestimmte Umschaltspannung aufgebaut hat oder wenn die aufgebaute Spannung vor Erreichen der Umschaltspannung nach einem vorherigen Anstieg wieder abfällt oder aber wenn die Temperatur einen einstellbaren Wert überschreitet, und zwar je nachdem, welche von diesen Bedingungen zuerst eintritt.

Die zweite Ladephase wird beendet, sobald eine vorgegebene Zeit verstrichen ist oder eine bestimmte Abschaltspannung erreicht ist oder eine bestimmte Temperatur des zu ladenden Akkumulators überschritten wird. Dabei wird ein Abschalten vor Ablauf der vorgegebenen Ladedauer als Kriterium einer zu geringen Istkapazität gewertet.

Es ist an sich bekannt, beispielsweise durch die DE-AS 2 716 862, eine Schnelladung in mehreren Phasen durchzuführen, wobei in der ersten Phase im allgemeinen mit einem sehr viel höheren Ladestrom gearbeitet wird, wie in der zweiten Phase, die sich an die erste Phase anschließt, und zwar für eine genau vorgegebene Zeit.

Diese bekannten Ladeverfahren dienen zwar dazu, bei Akkumulatoren mit ausreichender Kapazität eine Überladung sicher zu verhindern. Irgendein Kriterium über die eingeladene Kapazität wurde aber bislang bei keinem Ladeverfahren abgeleitet.

Bei dem Verfahren nach der Erfindung hingegen wird dadurch, daß die Abschaltung wahlweise nach einer vorgegebenen Zeit oder bei Erreichen einer bestimmten Spannung oder aber bei Überschreiten einer vorgegebenen Grenztemperatur erfolgt, eine Aussage gemacht, welchen Prozentsatz der Nennkapazität (Istkapazität) ein Akkumulator bei Ladeende erreicht hat.

Dabei geht der Erfindung die Erkenntnis voraus, daß Akkumulatoren mit zu geringer Nennkapazität während des Ladevorganges in einer Zeit, die kürzer ist als die normale Ladedauer, eine Klemmenspannung erreichen, die höher liegt als bei voll aufgeladenen Akkumulatoren, die die vom Hersteller angegebene Nennkapazität noch aufweisen. Auch steigt an den einzelnen Zellen bei einem Überladen, und das ist immer dann der Fall, wenn Akkumulatoren mit zu geringer Nennkapazität über einen Zeitraum aufgeladen werden, der für ein vollständiges Laden bei ausreichender Kapazität notwendig wäre, eine überhöhte Temperatur auf, die, wie vorstehend dargelegt, als Abschaltkriterium zur Kennzeichnung der zu geringen Kapazität herangezogen wird.

Für das Verfahren nach der Erfindung eignet sich gemäß einer besonders vorteilhaften Weiterbildung des Erfindungsgedankens die Verwendung eines pulsierenden Gleichstromes als Ladestrom, und zwar vorzugsweise in beiden Ladephasen.

An sich ist, insbesondere auch bei Blei-Akkumulatoren (ETZ 1982, Seite 13), die Verwendung von pulsierendem Gleichstrom zur Aufladung von Akkumulatoren bekannt. Bei der Wiederaufladung von NiCd-Akkus wird der Verwendung eines pulsierenden Gleichstromes sogar ein gewisser regenerierender Effekt zugeschrieben. Darüberhinaus erwärmt sich der aufzuladende Akkumulator während des Ladevorgangs weniger, weshalb der Einsatz eines pulsierenden Gleichstroms für jede Schnelladung besonders vorteilhaft ist.

Für die Zwecke der Erfindung hat darüber hinaus die Anwendung eines pulsierenden Gleichstroms den Vorteil, daß je nach dem Aufwand, die an dem Akkumulator bzw. den einzelnen Zellen anliegende Spannung, die ja für die Zwecke der Erfindung ständig gemessen werden muß, während einer anliegenden Spannung (Anliegen eines Ladeimpulses) oder aber ohne Ladespannung (Impulspause) abgetastet und gemessen werden kann.

Die Umschaltung von der ersten Ladephase in die zweite Ladephase soll erfindungsgemäß bei Erreichen einer vorgegebenen Spannung, die vorzugsweise der Spannung entspricht, die vom Hersteller angegeben wird, umgeschaltet werden, sofern nicht vorher der Akkumulator eine Temperatur erreicht, die einen vorgegebenen Maximalwert überschreitet. Dabei liegt die Umschaltspannung in der Größenordnung von 1,525 Volt pro Zelle.

Der Erfinder hat aber festgestellt, daß bei Akkumulatoren mit sehr großer Kapazität diese Umschaltspannung vielfach nicht erreicht wird, sondern daß die erste Ladephase, an die sich die zeitlich begrenzte zweite Ladephase anschließt, dann abgebrochen werden kann, wenn die an den Klemmen des Akkumulators aufgebaute Spannung nach einem Anstieg vor Erreichen der vorgegebenen Umschaltspannung wieder abfällt.

Dieser Vorgang wurde nämlich bei sehr guten Zellen, d. h. Zellen mit großer Kapazität (d. h. einer Istkapazität, die über der Nennkapazität liegt) beobachtet, und bei Anwendung bisheriger Verfahren würde die Nichtbeachtung dieser Tatsache zu einem verlängertem, nicht notwendigem Ladevorgang mit hohem $I_{10}$ führen, bis dann über die Temperaturentwicklung der Ladevorgang abgeschaltet und trotz der vorhandenen großen Kapazität der Akkumulator als unbrauchbar gekennzeichnet würde.

Auch die Kriterien der zweiten Ladephase, also die einzustellende Zeit ebenso wie die Grenzspannung und die Grenztemperatur, sollten gemäß vorteilhafter Ausgestaltungen des Erfindungsgedankens jeweils von den vom Hersteller angegebenen Werten erfolgen. In der Praxis ergibt sich dabei für Akkus eine Ladezeit der zweiten Ladephase von etwa 75 Minuten, wobei Akkumulatoren, die während dieser Zeit eine Temperatur von etwa 42 °C überschreiten, im allgemeinen auszuscheiden sind.

Hinsichtlich der Grenzspannung ist darauf hinzuweisen, daß Akkumulatoren mit geringer Kapazität bei gleicher Ladezeit im allgemeinen eine höhere Spannung pro Zelle aufweisen, als Akkumulatoren mit der angegebenen Nennkapazität.

Dementsprechend empfiehlt es sich, sofern bei einem vorgegebenen Typ eines Akkumulators zur Auswahl von Akkumulatoren, die beispielsweise mindesten 90 % der Nennkapazität haben sollen, die Abschaltspannung in der zweiten Ladephase auf etwa 1,5 Volt pro Zelle einzustellen, während beispielsweise für eine Auswahl aller Akkumulatoren, die nicht mindestens 60 % der Nennkapazität erreichen können, die Abschaltspannung dann auf beispielsweise 1,57 Volt pro Zelle, und für solche, die nicht wenigstens 30 % der Nennkapazität erreichen können, auf beispielsweise 1,63 Volt pro Zelle einzustellen ist.

Diesen Zahlenangaben sind als Beispiele zu werten und sollen die Zusammenhänge aufzeigen. Für den Fachmann ist ersichtlich, daß diese — allerdings geringfügig abhängig von dem von den Herstellern verwendeten Ausgangsmaterial und dem konstruktiven Gegebenheiten variiert werden müssen. Dabei empfiehlt es sich in jedem Fall gemäß einer anderen vorteilhaften Weiterbildung des Erfindungsgedankens, die einzelnen Um- und Abschaltspannungen abhängig von der Umgebungstemperatur nachzuführen.

Das vorstehend erläuterte Verfahren kann wie schon dargelegt, unmittelbar in einer Vorrichtung zum Schnelladen realisiert werden, wenn diese gemäß der Weiterbildung des Erfindungsgedankens zusätzlich zu zwei einem pulsierenden Gleichstrom liefernden Stromquellen mit unterschiedlichen Ausgangsleistungen, die über zwei entgegengesetzt arbeitende Schalter wahlweise über einen Unterbrecher an den freien Pol des zu ladenden Akkumulators angeschlossen sind, eine Logikschaltung aufweist, der die Ausgangssignale von vier Triggerschaltungen zugeführt sind, von denen eine abhängig von einem Temperaturfühler und zwei abhängig von der am zu ladenden Akkumulator anliegendem Spannung im Vergleich zu Referenzspannungen sowie eine zeitabhängig geschaltet werden. Die Logikschaltung übernimmt dann die Umschaltung sowie die Abschaltung des Ladevorgangs selbst.

Um der Bedienungsperson unmittelbar die Auswertung des Verfahrens zu erleichtern, ist dann gemäß einer weiteren Weiterbildung des Erfindungsgedankens der Logikschaltung ein Anzeigedisplay (-feld) zugeordnet, über das angezeigt wird, ob der Ladevorgang über die Gesamtzeit, was das Vorhandensein einer ausreichenden Istkapazität kennzeichnet, abgelaufen ist oder vorzeitig wegen überhöhter Spannung und/oder überhöhter Temperatur abgebrochen werden mußte, was eine zu geringe Ladekapazität anzeigt.

Weitere Einzelheiten einer derartigen Schnelladevorrichtung mit einer Logikschaltung zur Durchführung des Verfahrens nach der Erfindung wird im folgenden in Verbindung mit der anliegenden Zeichnung erläutert.

Dabei zeigt

Figur 1  einen Blockschaltbild des Schnelladegerätes für die Zwecke der Erfindung und

Figur 2  eine perspektivische Ansicht des Ladegehäuses mit Anzeigefeld.

Für die folgende Erläuterung ist davon ausgegangen, daß das Ladegerät für eine Nickel-Cadmium-Akkumulatoren-Batterie bestehend aus 8 Nickel-Cadmium-Zellen mit einer gesamten Nennspannung von 9,6 Volt und einer Nennkapazität von 450 mAh bestimmt ist.

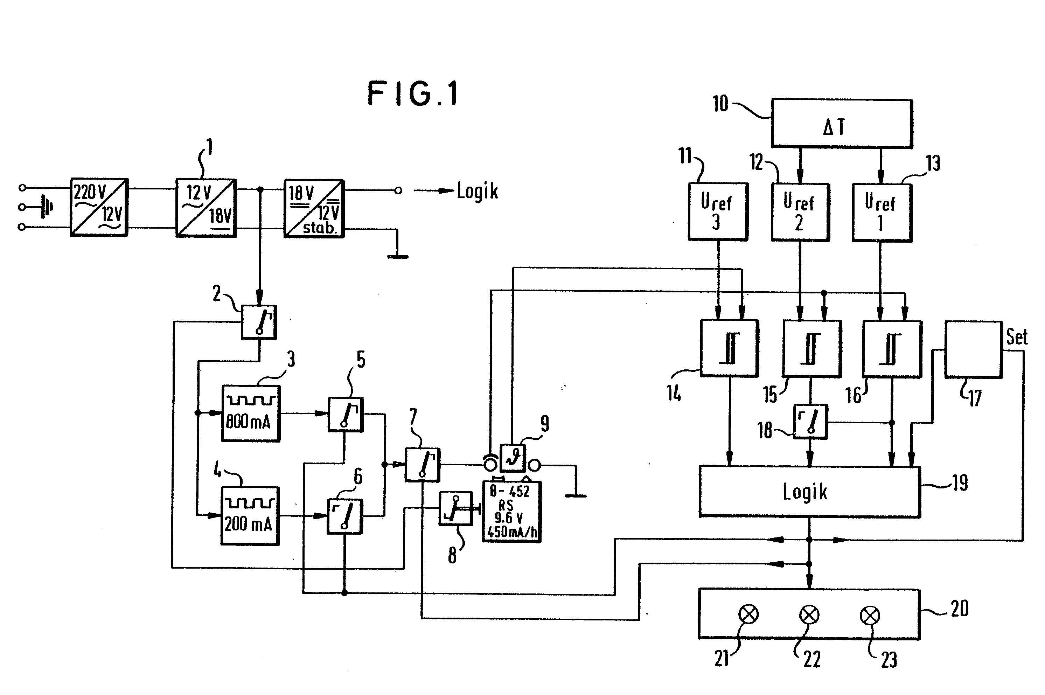

Wie aus Fig. 1 zu ersehen, weist das Schnelladegerät eine Stromversorgung 1 auf, die außer der Versorgung eines Logikkreises über einen Umschalter 2 zwei Konstantstromquellen 3 und 4 speist. Die Konstantstromquellen werden dabei durch einen — nicht gezeigten — Zerhacker gesteuert, die den Strom in einen pulsierenden Konstantstrom mit definierten Stromwerten von 800 mA bzw. 200 mA umformt.

Die Ausgänge der Konstantstromquellen 3 und 4 führen zu Umschaltern 5 und 6. Dabei ist der Ausgang der Konstantstromquelle 3, die den höheren Ladestrom abgibt, am Ruhekontakt des Umschalters 5 angeschlossen, während der Ausgang der Konstantstromquelle mit dem niedrigerem Ladestrom 4 an Arbeitskontakt des Umschalters 6 liegt. Die beiden Umschalter werden abhängig von einer Triggerschaltung 16 über eine Logikschaltung 19 gemeinsam umgeschaltet. Die negativen Pole der beiden Konstantstromquellen 3 und 4 sind untereinander und gemeinsam mit dem negativen Pol des zu ladenden Akkus elektrisch leitend, gegebenenfalls über den Erdanschluß, verbunden, während die positiven Pole wahlweise über die Umschalter 5 und 6 mit den Konstantstromquellen über einen Unterbrecher 7, dessen Funktion im folgenden noch erläutert wird, elektrisch leitend verbunden werden können. Auch der Unterbrecher 7 wird von der Logikschaltung 19 gesteuert, die eingangseitig von weiteren zwei Triggerschaltungen 14 und 15 angesteuert wird.

Dabei liegt zwischen der Triggerschaltung 15 und dem entsprechenden Eingang der Logikschaltung 19 ein Schalter 18, der von der Triggerschaltung 16 betätigt wird. Die Eingänge der Triggerschaltungen 15 und 16 sind an dem positiven Pol der zu ladenen Batterie angeschlossen, während der Eingang der Triggerschaltung 14 mit einem Temperaturfühler 9 an dem zu ladenen Akkumulator elektrisch leitend verbunden ist. Ein weiterer Eingang der Logikschaltung 19 wird abhängig von der vierten Triggerschaltung 17, einem Zeitschalter, angesteuert, der seinerseits wieder von der Logikschaltung 19 gesetzt wird.

Die Logikschaltung 19 steuert eine Anzeigeeinheit 20, die Anzeigeelemente 21, 22 und 23 aufweist. Den Triggern 14, 15 und 16 werden Differenzspannungen zugeführt, die von den Referenzspannungsquellen 11, 12 und 13 abgeleitet sind. Dabei werden die Referenzspannungen der Referenzspannungsquellen 12 und 13 durch eine Temperaturauswerteschaltung 10 entsprechend nachgeführt, um, wie oben dargelegt, die Abschaltspannungen temperaturabhängig variieren zu können.

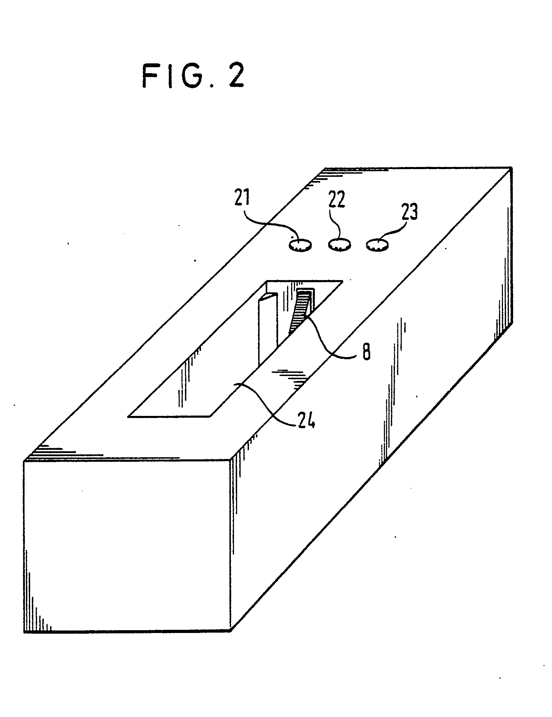

Das so aufgebaute Schnelladegerät zur Durchführung des Verfahrens nach der Erfindung funktioniert im wesentlichen wie folgt. Der zu ladende Akkumulator wird in den Ladeaufnahmeschacht 24 (Fig. 2) gesteckt, der so ausgerüstet ist, daß eine Verpolung sicher verhindert wird. Mit dem Einstecken wird ein Mikroschalter 8 eingeschaltet, der über seinen Schaltkontakt 2 (Fig. 1) die Konstantstromquellen an Spannung legt und damit einschaltet. Dabei wird gleichzeitig eine der Lampen, nämlich die Lampe 21, in der Anzeigeeinheit eingeschaltet, die, beispielsweise gelb, für die Dauer des gesamten Ladevorganges aufleuchtet.

Aufgrund der Kontaktstellung wird nun zunächst in der ersten Ladephase von der Konstantstromquelle 3 ein pulsierender Ladestrom von 8 × $I_{10}$ in die zu ladende Batterie eingespeist. Bei Erreichen einer vorgegebenen Zellenspannung, von z. B. 1,525 Volt pro Zelle, das ist gleich 12,12 Volt für die Akkumulatorbatterie, steuert die Logikschaltung 19 abhängig von der Triggerschaltung 16 die Umschalter 5 und 6 um, wodurch die zweite Ladephase, in der der Pulsladestrom auf etwa 3 × $I_{10}$ begrenzt ist, beginnt. Mit dem Umschalten wird gleichzeitig der Zeitgeber 17 gestartet, dessen Laufzeit beispielsweise auf 85 Min. eingestellt ist.

Mit dem Umschalten der Umschalter 5 und 6 wird außerdem die Triggerschaltung 15 aktiviert, die den Ladevorgang beim Erreichen einer bestimmten Spannung in der zweiten Ladephase dann beendet, wenn die Ladezeit noch nicht abgelaufen sein sollte. Ein derartiges vorzeitiges Ladeende wird über eine rote Lampe 23 angezeigt.

In beiden Phasen wird die Temperatur des zu ladenen Akkumulators über den Temperaturfühler 9 überwacht und der Ladevorgang unterbrochen, wenn diese Temperatur z. B. 42 °C erreichen sollte, da bei dieser Temperatur sich keine nennenswerte Kapazität mehr ansammeln kann, wobei es gleichgültig ist, ob die Temperatur durch äußere Einflüsse, z. B. durch Sonneneinstrahlung oder Einfluß eines Heizkörpers, durch Wärmeentwicklung im Ladegerät oder aus sonstigen Umwelteinflüssen, erreicht wird oder aber durch Eigenerhitzung, falls der Akkumulator infolge eines Defektes, beispielsweise eines inneren Kurzschlusses, diese Temperatur erreicht. Auch in diesem Fall erfolgt über die Triggerschaltung 14 eine Abschaltung des Ladevorganges, was ebenfalls über die rote Lampe 23 angezeigt wird. Auch ein derartiger Akkumulator ist wegen zu geringer Kapazität nicht brauchbar.

Wenn hingegen die volle Ladezeit in der zweiten Ladephase durchlaufen wird und der Ladevorgang abhängig von der Triggerschaltung 17 über die Logikschaltung 19 beendigt wird, wird die Lampe 22, eine grüne Lampe, angeschaltet, die anzeigt, daß der geladene Akkumulator eine ausreichende Istkapazität aufweist.

Es wurde schon erwähnt, daß durch Wahl der Referenzspannung der Referenzspannungsquelle 12, die ihre Spannung an die Triggerschaltung 15 weitergibt, die Grenze der zu überschreitenden Istkapazität dadurch verändert werden kann, daß die Referenzspannung entsprechend höher gewählt wird.

Das Verfahren nach der Erfindung sowie die zur Durchführung des Verfahrens erfindungsgemäß konzipierte Vorrichtung wurde anhand eines konkreten Ablaufes und einer konkreten Ausführungsform erläutert. Für den auf dem Fachgebiet tätigen Fachmann ist dabei ersichtlich, daß eine Reihe von Abwandlungen im Rahmen der Erfindung möglich sind. So kann insbesondere die Anzeigeschaltung dahingehend erweitert werden, daß verschiedene Stufen der jeweils erreichten Kapazität angezeigt werden, d. h. Zwischenzeiten bzw. gleichzeitige Auswertung mehrerer Referenzspannungen dahingehend, daß zunächst angezeigt wird, wenn 30 % der Nennkapazität, dann 60 % und 90 % erreicht sind, um die jeweils geladenen Akkumulatoren je nach der Bedeutung des durch sie zu speisenden Gerätes (Notrufgeräte, Feueralarm usw. oder einfache Sprechfunkgeräte) auswählen zu können und einem Gerät mit erhöhter Sicherheit die besseren Akkumulatoren zuordnen zu können als den anderen Geräten.

Weiter ist es im Rahmen der Erfindung selbstverständlich möglich, daß in dem Ladegerät eine dritte Ladephase, in Form des Ladeerhaltpunktbetriebes, vorzusehen, indem eine dritte Konstantstromquelle mit geringem Ladestrom und/oder großen Impulspausen nach positivem Abschluß der zweiten Ladephase eingeschaltet wird, wenn die einzelnen Akkumulatoren längere Zeit in dem Gerät verbleiben sollten.

In der Praxis hingegen empfiehlt es sich, die Ladeerhaltung für mehrere Akkumulatoren parallel in einem eigenen Gerät zu realisieren.

**Patentansprüche**

1. Verfahren zum Überwachen der jeweils eingeladenen Kapazität (Istkapazität) von aus Nickel-Cadmium-Zellen aufgebauten Akkumulatoren (NiCd-Akkus) während einer von einem unbekannten Ladezustand ausgehenden Schnelladung in mehreren Ladephasen, dadurch gekennzeichnet, daß

a) dem NiCd-Akku in der ersten Ladephase ein Ladestrom zugeführt wird, der ein Mehrfaches des vom Hersteller angegebenen Ladestromes $I_{10}$ beträgt, daß

b) von der ersten Ladephase auf eine zweite Ladephase mit geringerem Ladestrom umgeschaltet wird, sobald sich über dem zu ladenden Akkumulator bzw. einer einzelnen Zelle, eine bestimmte Umschaltspannung aufgebaut hat oder die aufgebaute Spannung vor Erreichen der Umschaltspannung nach vorherigem Anstieg wieder abfällt oder die Temperatur einen einstellbaren Wert überschreitet, je nachdem, welche der Bedingungen zuerst eintritt, und daß

c) die zweite Ladephase beendet wird, sobald eine gewählte Zeit verstrichen ist oder eine bestimmte Abschaltspannung erreicht ist oder eine bestimmte Temperatur des zu ladenden Akkumulators überschritten wird, je nachdem welche Bedingung zeitlich zuerst eintritt, wobei ein vorzeitiges Abschalten als Kriterium einer zu geringen Istkapazität ausgewertet wird.

2. Verfahren nach Anspruch 1, dadurch gekennzeichnet, daß als Ladestrom in den beiden Ladephasen ein pulsierender Gleichstrom mit rechteckigem Impulsverlauf verwendet wird.

3. Verfahren nach Anspruch 1 oder 2, dadurch gekennzeichnet, daß die Umschaltspannung von der ersten Ladephase in die zweite Ladephase bei einer Spannung gewählt wird, bei der die Spannung der einzelnen Zelle die vom Hersteller angegebenen Werte nicht überschreitet.

4. Verfahren nach Anspruch 3, dadurch gekennzeichnet, daß als Umschaltspannung eine Spannung gewählt wird, bei der die Spannung der einzelnen Zelle einen Wert von etwa 1,525 Volt nicht überschreitet.

5. Verfahren nach Anspruch 1 oder 2, dadurch gekennzeichnet, daß die Dauer der zweiten Ladephase so gewählt wird, daß die Zellen nicht überladen werden, im vorgegebenen Rahmen unbrauchbare Zellen vor Ablauf der Zeit durch ein anderes Kriterium (dU/dt) ausgeschieden werden.

6. Verfahren nach Anspruch 5, dadurch gekennzeichnet, daß als maximale Zeitdauer der zweiten Ladephase etwa 75 Min. gewählt werden.

7. Verfahren nach Anspruch 1 oder 2, dadurch gekennzeichnet, daß als Temperaturobergrenze für beide Ladephasen ein Wert nach Angaben der jeweiligen Hersteller gewählt wird, bei der die Zelle Schaden nehmen kann und/oder keine nennenswerte Ladung mehr aufnimmt.

8. Verfahren nach Anspruch 7, dadurch gekennzeichnet, daß als Temperaturobergrenze für die zweite Ladephase etwa 42 °C gewählt werden.

9. Verfahren nach einem der vorhergehenden Ansprüche, dadurch gekennzeichnet, daß die Abschaltspannung für zu ladende Akkumulatoren, deren Istkapazität unterhalb des vorgegebenen Wertes liegt, höher gewählt ist als die Spannung für Zellen, die mindestens 100 % der vorgegebenen Nennkapazität erreichen.

10. Verfahren nach einem der Ansprüche 1 bis 9, dadurch gekennzeichnet, daß die Um- und Abschaltspannung in Abhängigkeit von der Umgebungstemperatur nachgeführt wird.

11. Verfahren nach einem der vorhergehenden Ansprüche, dadurch gekennzeichnet, daß zur Ladeerhaltung den eine ausreichende Istkapazität aufweisenden Akkumulatoren nach Beendigung der zweiten Ladephase innerhalb einer dritten Ladephase in vergrößertem Zeitabstand Spannungserhaltungsimpulse zugeführt werden.

12. Vorrichtung zur Durchführung des Verfahrens nach einem oder mehreren Ansprüchen 1 bis 11, dadurch gekennzeichnet, daß zwei einen pulsierenden Gleichstrom liefernde Stromquelle (3, 4) mit unterschiedlichen Ausgangsleistungen vorgesehen sind, die über zwei entgegengesetzt arbeitende Schalter (5, 6) wahlweise über einen Unterbrecher (7) an den freien Pol des zu ladenden Akkumulators angeschlossen sind, daß weiter eine Logikschaltung (19) vorgesehen ist, der die Ausgangssignale von vier Triggerschaltungen (14 bis 17) zugeführt sind, von denen eine (14) abhängig von einem Temperaturfühler (9) und zwei (15, 16) abhängig von der am zu ladenden Akkumulator anliegenden Spannung im Vergleich zu Referenzspannungen sowie eine (17) zeitabhängig geschaltet werden, und die die Umschaltung sowie die Abschaltung des Ladevorgangs steuert.

13. Vorrichtung nach Anspruch 12, dadurch gekennzeichnet, daß von der Logikschaltung zusätzlich ein Anzeigefeld (20) angesteuert ist, das anzeigt, ob der Ladevorgang über die Gesamtzeit (ausreichende Kapazität) abgelaufen ist oder vorzeitig (zu geringe Ladekapazität) abgebrochen wurde.

## Claims

1. A process for monitoring the respectively charged capacity (actual capacity) of accumulators which consist of nickel cadmium cells (NiCd-Accs), during rapid charging from an unknown charging state in a plurality of charging phases, characterised in that

a) a charging current which amounts to a multiple of the charging current $I_{10}$ specified by the manufacturer is supplied to the NiCd-accumulator in the first charging phase, that

b) switching over is effected from the first charging phase to a second charging phase with a weaker charging current as soon as a specific change-over voltage has been built up across the accumulator to be charged or an individual cell, as the case may be, or before the change-over voltage has been reached the built-up voltage drops after a previous rise or the temperature exceeds an adjustable value depending upon which condition occurs first, and that

c) the second charging phase is terminated as soon as a selected time has passed or a specific switch-off voltage has been reached or a specific temperature of the accumulator to be charged is exceeded, depending upon which condition occurs first in terms of time, where premature switching off is analysed as an indication of an actual capacitance which is too low.

2. A process as claimed in Claim 1, characterised in that a pulsating direct current having a rectangular pulse pattern is used as charging current in the two charging phases.

3. A process as claimed in Claim 1 or 2, characterised in that the change-over voltage from the first charging phase to the second charging phase is set at such a voltage that the voltage across an individual cell does not exceed the values specified by the manufacturer.

4. A process as claimed in Claim 3, characterised in that a voltage is used as a change-over voltage, at which the voltage of the individual cell does not exceed a value of approximately 1.525 volt.

5. A process as claimed in Claim 1 or 2, characterised in that the duration of the second charging phase is selected to be such that the cells are not over-charged and within a predetermined limit before the expiration of the time useless cells are separated by another criterion (dU/dt).

6. A process as claimed in Claim 5, characterised in that the maximum period of time of the second charging phase is approximately 75 minutes.

7. A process as claimed in Claim 1 or 2, characterised in that as an upper temperature limit for both charging phases, in accordance with the specifications of the respective manufacturer, a value is selected at which the cell can be damaged and/or considerable charging no longer occurs.

8. A process as claimed in Claim 7, characterised in that an upper temperature limit of approximately 42 °C is selected for the second charging phase.

9. A process as claimed in one of the preceding Claims, characterised in that the switch-off voltage for the accumulators which are to be charged and whose actual capacity lies below the predetermined value, is selected to be higher than the voltage for the cells which reach at least 100 % of the predetermined nominal capacity.

10. A process as claimed in one of Claims 1 to 9, characterised in that the change-over and switch-off voltage is followed up in dependence upon the ambient temperature.

11. A process as claimed in one of the preceding Claims, characterised in that in order to maintain the charge, the accumulators having a sufficient actual capacity at the end of the second charging phase are supplied with voltage-maintaining pulses an increased time interval within a third charging phase.

12. A device for the implementation of the process as claimed in one or more of Claims 1 to 11, characterised in that there are provided two current sources (3, 4) which supply a pulsating direct current and have different output powers, and which are optionally connected by means of two oppositely operating switches (5, 6) to the free pole of the accumulator to be charged via an interrupter (7), that there is further provided a logic circuit (19) which is supplied with the output signals of four trigger circuits (14 to 17), one (14) of which is switched in dependence upon a temperature sensor (9) and two (15, 16) are switched in dependence upon the voltage connected to the accumulator to be charged, in comparison with reference voltages, and one (17) is switched in dependence upon time, and which logic circuit controls the change-over and the switch-off of the charging operation.

13. A device as claimed in Claim 12, characterised in that the logic circuit additionally controls a display field (20) which displays whether the charging operation has occurred over the overall period of time (sufficient capacity) or was interrupted prematurely (charging capacity to low).

**Revendications**

1. Procédé pour contrôler la capacité de charge (capacité effective) d'accumulateurs (accus NiCd) constitués par des cellules au Nickel-Cadmium, pendant une charge rapide en plusieurs phases et commençant à partir d'un état de charge inconnu, caractérisé par le fait qu'il consiste :

a) à appliquer à l'accu NiCd, dans la première phase de charge, un courant de charge qui est un multiple du courant de charge $I_{10}$ indiqué par le fabricant,

b) à commuter de la première phase de charge sur une seconde phase de charge avec un courant de charge plus faible dès que s'est établie une tension de commutation déterminée aux bornes de l'accumulateur à charger ou aux bornes d'une cellule, ou dès que la tension qui s'est établie chute à nouveau avant que soit atteinte la tension de commutation et après un accroissement antérieur, ou dès que la température dépasse une valeur réglable, selon celle de ces conditions qui intervient en premier,

c) à interrompre la seconde phase de charge dès qu'un temps choisi s'est écoulé ou dès qu'une tension de débranchement déterminée est atteinte ou dès qu'une température déterminée de l'accumulateur à charger est atteinte, selon celle de ces conditions qui intervient en premier, un débranchement prématuré pouvant être considéré comme critère pour une capacité effective insuffisante.

2. Procédé selon la revendication 1, caractérisé par le fait que l'on utilise comme courant de charge dans les deux phases de charge, un courant continu pulsatoire à allure rectangulaire des impulsions.

3. Procédé selon la revendication 1 ou 2, caractérisé par le fait que la tension de commutation de la première phase de charge à la seconde phase de charge est choisie à une tension pour laquelle la tension d'une cellule individuelle ne dépasse pas les valeurs indiquées par le fabricant.

4. Procédé selon la revendication 3, caractérisé par le fait que l'on choisit comme tension de commutation une tension pour laquelle la tension des cellules individuelles ne dépasse pas une valeur égale à environ 1,525 Volts.

5. Procédé selon la revendication 1 ou 2, caractérisé par le fait que la durée de la seconde phase de charge est choisie de telle manière que les cellules ne soient pas surchargées, et que des cellules inutilisables, dans le cadre donné à l'avance, soient éliminées avant l'écoulement du temps, par un autre critère (dU/dt).

6. Procédé selon la revendication 5, caractérisé par le fait que l'on choisit pour la durée maximale de la seconde phase de charge environ 75 minutes.

7. Procédé selon la revendication 1 ou 2, caractérisé par le fait que l'on choisit comme limite supérieure de la température, pour les deux phases de charge, une valeur selon les indications du fabricant en question, pour laquelle la cellule peut être endommagée et/ou n'accepte plus une charge notable.

8. Procédé selon la revendication 7, caractérisé par le fait que l'on choisit comme limite supérieure de la température pour la seconde phase de charge, environ 42 °C.

9. Procédé selon l'une des revendications précédentes, caractérisé par le fait que la tension de débranchement pour les accumulateurs à charger, dont la capacité effective se situe en dessous d'une valeur prédéterminée, est choisie à un niveau supérieur à celui de la tension pour des cellules qui atteignent au moins 100 % de la capacité nominale.

10. Procédé selon l'une des revendications 1 à 9, caractérisé par le fait que la tension de commutation et de débranchement est asservie en fonction de la température ambiante.

11. Procédé selon l'une des revendications précédentes, caractérisé par le fait que pour la conservation de la charge, on applique aux accumulateurs qui possèdent une capacité effective suffisante, après la fin de la seconde phase de charge, pendant une troisième phase de charge et avec un intervalle de temps agrandi, des impulsions de conservation de la tension.

12. Dispositif pour la mise en œuvre du procédé selon une ou plusieurs des revendications 1 à 11, caractérisé par le fait que sont prévues deux sources de courant (3, 4) fournissant un courant continu pulsatoire, avec des puissances de sortie différentes, et qui sont, par l'intermédiaire de deux interrupteurs (5, 6) opérant en sens contraire l'un par rapport à l'autre, susceptibles d'être reliées par l'entreprise d'un interrupteur (7), au pôle libre de l'accumulateur à charger, qu'il est, en outre, prévu un circuit logique (14) auquel sont appliqués des signaux de sortie de quatre circuits de déclenchement (14 à 17) dont l'un (14) est commandé en fonction d'un capteur de température (9), dont deux (15, 16) sont commandés en fonction de la tension appliquée aux bornes de l'accumulateur à charger, comparativement à des tensions de référence et dont l'un (17) est commandé en fonction du temps, et qui commande la commutation ainsi que le débranchement du processus de charge.

13. Dispositif selon la revendication 12, caractérisé par le fait que le circuit logique attaque, de plus, un tableau de signalisation (20) qui indique si le processus de charge s'est déroulé sur la durée totale (capacité suffisante) ou s'il a été interrompu prématurément (capacité de charge trop faible).

# FIG.1

220V / 12V → 12V / 18V (1) → 18V / 12V stab. → Logik

2

3 — 800mA
4 — 200 mA
5
6
7
8
9 — B-452 RS 9.6 V 450mA/h

10 — ΔT
11 — U_ref 3
12 — U_ref 2
13 — U_ref 1

14
15
16
17 — Set
18
19 — Logik
20
21  22  23

0 114 871

# FIG. 2